# EUROPÄISCHE PATENTANMELDUNG

(11) **EP 3 454 222 A1**
(43) Veröffentlichungstag der Anmeldung: **13.03.2019**
(21) Anmeldenummer: 17190127.5
(22) Anmeldetag: 08.09.2017
(51) Int. Cl.: G06F 13/374, G05B 19/042, H04W 72/12, G05B 23/02, G05B 19/418

(54) **VERFAHREN UND AUTOMATISIERUNGSKOMPONENTE ZUR ÜBERTRAGUNG VON STEUERUNGSDATEN IN EINER INDUSTRIELLEN AUTOMATISIERUNGSANORDNUNG**

(71) Anmelder: Siemens Aktiengesellschaft, 80333 München (DE)
(72) Erfinder: Höme, Stephan, 91126 Schwabach (DE); Kerschbaum, Sven, 90768 Fürth (DE); Talanis, Thomas, 91336 Heroldsbach (DE)

(57) **Zusammenfassung**

Die Erfindung betrifft ein Verfahren und eine Automatisierungskomponente (Publisher P) zur Übertragung von Steuerungsdaten zwischen industriellen Automatisierungskomponenten (Publisher P, Subscriber S) gelöst, wobei zyklisch wiederholt Datentelegramme mit Datensätzen mit jeweils aktualisierten Steuerungsdaten über ein paketvermitteltes Netzwerk (N) übertragen werden. Dabei werden der sendenden Automatisierungskomponente (Publisher P) Auslastungs- oder Zustandsinformationen (NZ) über zumindest einen Abschnitt des Netzwerks (N) zur Verfügung gestellt oder von dieser Automatisierungskomponente (Publisher P) erfasst, wobei zumindest im Fall einer Überlastung des Abschnitts ein Teil der Datensätze mit einer dynamisch an die Auslastung angepassten Untersetzung übertragen wird, so dass bei einer Übertragung mit der Untersetzung ein betroffener Datensatz nicht mit jedem Zyklus der zyklischen Übertragung übermittelt wird. Durch dieses Verfahren wird die übertragene Datenmenge dynamisch an die verfügbare Bandbreite angepasst, ohne dass von einer grundsätzlich zyklusbasierten Kommunikation abgewichen werden muss.

## Beschreibung

Die Erfindung betrifft ein Verfahren zur Übertragung von Steuerungsdaten zwischen industriellen Automatisierungskomponenten gemäß dem Oberbegriff des Patentanspruchs 1, und eine Automatisierungskomponente zur Übertragung von Steuerungsdaten gemäß dem Oberbegriff von des Patentanspruchs 13.

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen bzw. Datentelegrammen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

Heute ist Feldbuskommunikation zwischen Steuerungen und Feldgeräten entweder zyklisch (nach IEC 61131) oder ereignisbasiert (nach IEC 61499). Ereignisbasierte Kommunikation überträgt Daten (im industriellen Umfeld häufig als "Steuerungsdaten" bezeichnet) nur dann, wenn sie geändert wurden (d.h. wenn ein Ereignis aufgetreten ist) und geht dadurch sparsamer mit den Kommunikationsressourcen um. Bei zyklischer Kommunikation werden im Gegensatz dazu in jedem Zyklus alle Daten übertragen, das führt zu einem hohen Overhead im Kommunikationssystem. Ereignisorientierte Übertragung erfordert jedoch unter Umständen (je nach Applikation) einen expliziten Mechanismus zur Sicherstellung der Übertragung (Paketverlusterkennung, Lifesign-/Heartbeat-Übertragung), wohingegen dies bei zyklischer Übertragung oft nicht erforderlich ist, da das Paket sowieso im nächsten Zyklus erneut übertragen wird.

Insbesondere die Ethernet-basierten Feldbusse werden heute nicht ausschließlich für die echtzeitkritische Prozessdatenkommunikation verwendet, sondern auch für die Übertragung sonstiger Daten (Diagnose, Webseiten, Firmware-Updates, Backups, ...), sogenannte NRT-Daten (non-realtime).

Bei ereignisbasierten Systemen ist in Zeiten, in denen weniger Änderungen bzw. Ereignisse auftreten, die Auslastung des Feldbusses durch Prozessdatenkommunikation geringer. Dadurch steht mehr Bandbreite für NRT-Daten zur Verfügung. Aus Gründen der Vorhersagbarkeit (Determinismus) und durch andere Schwierigkeiten (z.B. Ereignisschwälle) haben sich ereignisbasierte Kommunikationssysteme im Feldbusbereich jedoch bis heute nicht durchgesetzt.

Durch die gemeinsame Nutzung des Kommunikationssystems bzw. Netzwerks durch Prozessdatenkommunikation und andere Dienste kann es zu zeitweisen Einschränkungen der verfügbaren Bandbreite für die Prozessdatenkommunikation kommen. Heutige industrielle Ethernet-Technologien versuchen diese Einschränkung der verfügbaren Bandbreite z.B. durch Priorisierung oder Übertragung über mehrere Netzwerke zu vermeiden. In zukünftigen Netzen, welche mehrere Anwendungen übertragen, kann dies jedoch dennoch auftreten.

In größeren (zukünftigen) Produktionsnetzen (Fabrics) wird es durch den Einsatz von TSN (Time-sensitive Networking) möglich, den Ausfall einzelner Teilstrecken durch Redundanzumschaltungen zu tolerieren. In diesem Fall kann jedoch die verbleibende verfügbare Bandbreite beschränkt sein, d.h. es können nicht mehr alle Prozessdaten zyklisch übertragen werden. In heutigen Systemen würde der Ausfall der zyklischen Kommunikation zu einem Verbindungsabbruch und damit im Endeffekt typischer Weise zu einem Anlagenstillstand mit hohen Kosten führen.

Moderne Anlagen und Anwendungen fordern daher mehr Flexibilität im Feld- und Anlagenbus, ohne den Paradigmenwechsel auf eventbasierte Kommunikation durchzuführen.

Heute wird das Problem oft durch Überdimensionierung des Netzwerkes bzw. der Netzwerkressourcen gelöst, d.h. die Netze werden so dimensioniert, dass immer genügend Bandbreite zur Verfügung steht. Es kann jedoch vorkommen, dass die ursprünglich eingeplante Bandbreite dennoch nicht ausreicht.

Switches enthalten heute Queueing- und Prioritätsmechanismen, durch welche bei Überlast Pakete verworfen werden. Diese Strategien sind jedoch nicht verbindungsselektiv und können nicht entscheiden, welche Daten wichtiger sind und welche wiederholt zyklisch übertragen werden.

Heutige Feldbusse wie z.B. Profinet unterstützen die sogenannte Untersetzung. Dabei wird zwischen einem Feldgerät und der Steuerung nicht ein einziges, komplettes Prozessdatenabbild übertragen, sondern mehrere mit unterschiedlichen Zykluszeiten. Dabei ist jedoch sowohl die Zuweisung der Daten zum Prozessabbild, als auch deren Zyklus fest projektiert. Es kann nicht auf den aktuellen Netzzustand reagiert werden.

Es ist also eine Aufgabe der vorliegenden Erfindung, die Datenübertragung in industriellen Netzen unter den verschiedensten Auslastungsbedingungen zu optimieren.

Der Kern der erfindungsgemäßen Lösung der Aufgabe sieht vor, dass zyklische Prozessdatenkommunikation abhängig vom Netzzustand mit einer dynamischen, datenpunktbasierten Untersetzung gefahren wird, um die zur Verfügung stehende Bandbreite bestmöglich auszunutzen und einen Betrieb der Anlage auch bei schlechterem Netzzustand zu ermöglichen. Es sind nicht mehr mehrere Zyklen mit jeweils fest projektierter Untermenge der Steuerungsdaten (festgelegte Untersetzung) nötig, sondern es wird nur einziger kompletter Zyklus projektiert, wobei aber ein Teil der Werte abhängig vom Netzwerkzustand nicht in jedem Zyklus übertragen wird.

Die Lösung der Aufgabe sieht insbesondere den Einsatz eines Verfahrens gemäß Patentanspruch 1 und einer Automatisierungskomponente gemäß Patentanspruch 13 vor.

Die Aufgabe wird durch ein Verfahren zur Übertragung von Steuerungsdaten zwischen industriellen Automatisierungskomponenten gelöst, wobei zyklisch wiederholt Datentelegramme mit Datensätzen mit jeweils aktualisierten Steuerungsdaten über ein paketvermitteltes Netzwerk übertragen werden. Dabei werden der sendenden Automatisierungskomponente Auslastungsinformationen über zumindest einen Abschnitt des Netzwerks zur Verfügung gestellt oder von dieser Automatisierungskomponente erfasst, wobei zumindest im Fall einer Überlastung des Abschnitts ein Teil der Datensätze mit einer dynamisch an die Auslastung angepassten Untersetzung übertragen wird, so dass bei einer Übertragung mit der Untersetzung ein betroffener Datensatz nicht mit jedem Zyklus der zyklischen Übertragung übermittelt wird. Durch dieses Verfahren wird die übertragene Datenmenge dynamisch an die verfügbare Bandbreite angepasst, ohne dass von einer grundsätzlich zyklusbasierten Kommunikation abgewichen werden muss.

Die Lösung der Aufgabe sieht außerdem eine Automatisierungskomponente zur Übertragung von Steuerungsdaten zu zumindest einer weiteren Automatisierungskomponente einer industriellen Automatisierungsanordnung vor, wobei die Automatisierungskomponente zur zyklisch wiederholten Übertragung von Datentelegrammen mit Datensätzen mit jeweils aktualisierten Steuerungsdaten über ein paketvermitteltes Netzwerk eingerichtet ist. Dabei ist die Automatisierungskomponente zur Generierung oder zum Empfang von Auslastungsinformationen über zumindest einen Abschnitt des Netzwerks eingerichtet, wobei die Automatisierungskomponente derart eingerichtet ist, dass zumindest im Fall einer Überlastung des Abschnitts ein Teil der Datensätze mit einer dynamisch an die Auslastung angepassten Untersetzung übertragen wird, wobei bei einer Übertragung mit der Untersetzung ein betroffener Datensatz nicht mit jedem Zyklus der zyklischen Übermittlung vorgesehen ist. Mit dieser Anordnung können die anhand des Verfahrens beschriebenen Vorteile erzielt werden.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für die erfindungsgemäße Automatisierungskomponente.

Die in den abhängigen Patentansprüchen angegebenen vorteilhaften Ausgestaltungen können sowohl einzeln, als auch in sinnfälliger Kombination miteinander realisiert werden.

Bei wenig zeitkritischen Anwendungen kann es ausreichen, die für die Untersetzung bei der Übertragung auszuwählenden Daten bzw. Datensätze beispielsweise zufällig oder etwa nach einem "first come, first served" - Verfahren auszuwählen. In einer vorteilhaften Ausgestaltung jedoch erfolgt die Auswahl der im Fall einer Untersetzung seltender zu übertragendenden Datensätze anhand einer Prioritätsinformation zu den in den Datensätzen jeweils enthaltenen Steuerungsdaten. Dies hat zur Folge, dass Datensätze mit Steuerungsdaten, welchen eine hohe, dringliche Priorität zugeordnet ist, häufiger oder sogar immer übertragen werden, während andere Datensätze mit weniger prioren Steuerungsdaten seltener übertragen werden. Sinnvollerweise wird dabei mit unterschiedlichen Untersetzungsstufen gearbeitet, was bedeutet, dass der Grad der Untersetzung abhängig von der Priorität eines betreffenden Datensatzes und einer aktuell verfügbaren Bandbereite bzw. Auslastung eines Netzsegmentes oder Abschnittes variabel ist.

In einem einfachen Fall kann die Zuordnung von Prioritätsinformationen zu den Steuerungsdaten (also allgemein der "Payload" der Datenübertragung) bereits mit der Projektierung einer Automatisierungsanordnung festgelegt werden. Es ist jedoch vorteilhaft auch möglich, dass die Zuordnung der Prioritätsinformation zu den jeweiligen Steuerungsdaten und damit zu den jeweiligen Datensätzen erst zur Laufzeit der Automatisierungskomponenten erfolgt, wodurch das vorgeschlagene Verfahren automatisch auch auf bereits bestehende Automatisierungseinrichtungen angewendet werden kann. So kann insbesondere die Priorität anhand einer Zustandsinformation einer industriellen Automatisierungsanordnung, die die geschilderten Automatisierungskomponenten umfasst, erfolgen. Beispielsweise ist es dabei möglich, im Fall einer Störung eines Anlagenteils, die diesem Anlagenteil zugehörigen Steuerungsdaten mit einer höheren Priorität übertragen und damit keiner oder nur einer geringfügigen Untersetzung zu unterwerfen, während die Steuerungsdaten von Prozessen, Anlagenteilen oder Komponenten mit störungsfreiem Betriebszustand zu Gunsten der erstgenannten Steuerungsdaten in einem Untersetzungsbetrieb seltener übertragen werden.

Eine weitere Möglichkeit zur Priorisierung besteht darin, dass die Priorität anhand des Wertes eines zu übertragenden Steuerungsdatums festgelegt wird. So können beispielsweise Messwerte mit Zustandsinformationen, beispielsweise über die Betriebstemperatur eines Anlagenteils oder dgl., vor der Übertragung bewertet werden. Sofern sich der entsprechende Wert in einem unkritischen Wertebereich befindet, kann ein Datensatz mit diesem Parameter seltener übertragen werden. Nähert sich der Wert einer kritischen Grenze an, wird die Priorität entsprechend erhöht, so dass eine häufigere Übertragung stattfindet. Hat der Wert einen kritischen Grenzwert überschritten, kann ganz auf eine Untersetzung verzichtet werden, so dass dieser Wert dann mit höchster Priorität mit jedem Übertragungszyklus übermittelt wird.

In einem Extremfall überführt das zuvor geschilderte Wertbasierte Priorisierungsschema die Übertragung zu einer teilweise ereignisbasierten Kommunikation, was bedeutet, dass ein Datensatz nur in dem Fall überhaupt noch übertragen wird, in dem eine Grenzwertverletzung oder dgl., also ein Ereignis, auftritt. Sofern es die Bandbreite bzw. die Auslastung des Abschnitts des Kommunikationsnetzwerkes zulässt, wird wieder auf eine zyklusbasierte Kommunikation umgestellt, und bei ausreichender Verfügbarkeit des Netzwerkes auf eine Untersetzung vollkommen verzichtet.

Vorteilhaft werden für die Priorisierung von Steuerungsdaten Prioritätsklassen definiert, wobei zumindest eine Prioritätsklasse vorgesehen ist, für deren zugeordnete Steuerungsdaten keine Untersetzung vorgesehen bzw. erlaubt ist. Dies können beispielsweise Reglerparameter für eine Regelstrecke sein, wobei diese Reglerparameter für eine ordnungsgemäße Funktion des Reglers lückenlos und zeitnah zur Verfügung stehen müssen. Ebenso kann es sich für Alarme und andere Ereignisse verbieten, die entsprechenden Meldungen zu verzögern oder zu unterdrücken.

Die Priorisierung von Steuerungsdaten für die Steuerung des Grades der Untersetzung kann automatisch während einer Projektierung einer industriellen Automatisierungsanordnung, die die geschilderten Automatisierungskomponenten erfasst, erfolgen. Dabei wird den Steuerungsdaten jeweils eine Prioritätsinformation automatisch zugeordnet, wobei die jeweilige Verwendung des jeweiligen Steuerungsdatums als ein Kriterium für die jeweilige Priorität verwendet wird. So können beispielsweise solche Steuerungsparameter, die in den bereits erwähnten Regelalgorithmen (kurz: Reglern) verwendet werden, mit einer hohen Priorität versehen werden. Gleiches gilt für Variablen, Parameter und Prozesswerte, die in Unterprogrammen verwendet werden, die der Erzeugung oder Verarbeitung von Alarmen dienen. Dabei kann den entsprechenden Steuerungsparametern oder Steuerungsdaten beispielsweise eine Priorität zugeordnet werden, die der entsprechenden Alarmklasse des dort behandelten Alarms entspricht. Somit kann ein Projektierungssystem anhand der Verwendungsstellen von Steuerungsdaten zumindest entsprechende Vorschläge unterbreiten, inwieweit die damit zusammenhängenden Steuerungsdaten priorisiert werden können oder sollten.

Die Untersetzung der Daten gemäß dem beschriebenen Verfahren kann vorteilhaft in einem Anwendungsprogramm einer die Daten bereitstellenden bzw. sendenden Automatisierungskomponente ("Publisher") vorgenommen werden. Jedoch kann es vorkommen, dass die sendende Automatisierungskomponente keine Kenntnis über das weitere Routing der Datensätze bzw. der Datentelegramme besitzt. In einem solchen Fall kann es sinnvoll sein, die Organisation der Datenübertragung und damit die Organisation der Datentelegramme mit den Datensätzen und den darin enthaltenen Steuerungsdaten in Netzwerkkomponenten auszugliedern, beispielsweise in Switche, Router oder dgl. Ebenso ist es in einer alternativen Ausgestaltung möglich, nicht ein Anwendungsprogramm einer Automatisierungskomponente mit der Organisation der Datenübertragung und damit einer Organisation einer möglicherweise notwendigen Untersetzung zu betrauen, sondern dies in einem Netzwerkinterface (Netzwerkkarte oder dgl.) zu organisieren. In einem solchen Fall stellt ein Anwendungsprogramm einer Automatisierungskomponente die zu übertragenden Daten und ggf. Prioritätsinformationen für die Übertragung bereit, wobei dann die Netzwerktechnik, beispielsweise ein sog. "Asic" einer Netzwerkkarte, abhängig von einer Auslastungsinformation die Organisation der Datenübertragung übernimmt.

Die Auslastungsinformation über das Netzwerk bzw. über einzelne Abschnitte des Netzwerks können von einer separaten Netzwerktechnik (Network-Manager, Netzwerk-Monitoring oder dgl.) bereitgestellt werden, beispielsweise über das Simple-Network-Management-Protokoll (SNMP). Es ist jedoch auch möglich, dass eine sendende Automatisierungskomponente sich selber Informationen über die Auslastung bzw. verfügbare Bandbereite eines Netzwerks oder eines Abschnitts verschafft, insbesondere desjenigen Abschnitts, an dem die betreffende Automatisierungskomponente selbst angebunden ist. Dies kann beispielsweise durch eine lokale Überwachung des Datenverkehrs an der eigenen Netzwerkkarte bzw. dem eigenen Netzwerkinterface erfolgen. Selbstverständlich sind auch Mischformen möglich.

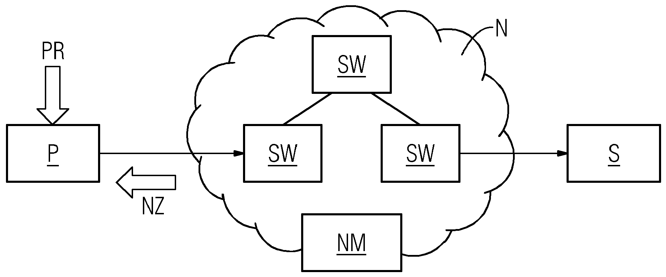

Ein Ausführungsbeispiel des erfindungsgemäßen Verfahrens wird nachfolgend anhand der Zeichnung erläutert. Dabei zeigt die einzige Figur in einer schematischen Darstellung ein Netzwerk mit Automatisierungskomponenten (Publisher, Subscriber) und entsprechender Netzwerktechnik (Switche, Network-Manager).

Ohne Einschränkung der Allgemeinheit der erfindungsgemäßen Lösung wird hier angenommen, dass die Automatisierungskomponenten S, P aus solchen Automatisierungskomponenten P bestehen, die Informationen bereitstellen (Publisher) und damit zyklisch wiederholt Datentelegramme mit Datensätzen mit jeweils aktualisierten Steuerungsdaten bereitstellen, und solchen Automatisierungskomponenten S (Subscriber), die diese Daten anfordern. Dabei wird in einem Normalbetrieb davon ausgegangen, dass in einem Zyklus alle Steuerungsdaten, die ein "Subscriber" angefordert hat, von der sendenden Automatisierungskomponente (Publisher P) übertragen werden.

Die Lösung des Bandbreitenproblems basiert vorteilhaft auf der Nutzung des Kommunikationssystems OPC UA PubSub. Dabei sendet ein Publisher zyklisch Telegramme (Datentelegramme), in welchem ein oder mehrere DataSets (Datensätze) mit Prozesswerten o.ä. (kurz: Steuerungsdaten) enthalten sind. Ein oder mehrere Subscriber empfangen diese Daten. Die DataSets werden anhand einer ID identifiziert, ihre Semantik (d.h. ihr Aufbau) ist vorher zwischen den Kommunikationsteilnehmern, also den Automatisierungskomponenten, ausgetauscht worden.

Der Zustand des Netzwerkes N wird kontinuierlich von den Switches S oder dem Netzwerkmanagement-Tool NM (Network Manager) detektiert (z.B. via SNMP-Traps). Diese informieren die Endgeräte z.B. durch LLDP oder ein Bit im Header von Paketen über den Netzzustand NZ und können somit bei Bandbreitenengpässen einen Notbetrieb auslösen. Dieser Notbetrieb muss dabei nicht für das gesamte Netzwerk N gelten, sondern kann sich auf einzelne Pfade bzw. Subtrees, also Abschnitte des Netzwerks, beziehen.

Alternativ können die Subscriber ein Problem bei der Übertragung erkennen und direkt beim Publisher den Notbetrieb triggern (entweder über ein separates Telegramm oder ein Statusbit in der zyklischen Kommunikation). Die Rückkehr zum Normalbetrieb erfolgt dann adaptiv. In regelmäßigen Abständen wird versucht, die Kommunikation wieder in den Normalbetrieb zu setzen und beim Fehlschlag der Notbetrieb aufrechterhalten.

Im Notbetrieb kann nun der Publisher die Menge der gesendeten Daten reduzieren. Dazu kann er entweder nicht in jedem Zyklus alle Datentelegramme (DataSets) übertragen (sondern nur ausgewählte), oder Zyklen komplett auslassen. D.h., es wird eine dynamische Untersetzung eingeführt.

Die Auswahl, welche Daten übertragen und welche ausgelassen werden, geschieht dabei auf Basis einer DataSet-Priorität PR, welche eine Aussage über die Wichtigkeit der in diesem DataSet enthaltenen Werte enthält. Die Zusammenstellung der Datenpunkte (Steuerungsparameter, also Messwerte, Aktuator-Werte etc.) zu DataSets und die Vergabe von deren Priorität erfolgt dabei auf Basis der Priorität PR einer jeden Automatisierungskomponente (Datenpunktes). Diese Priorität PR der Datenpunkte wird in einer Ausgestaltung während der Projektierung vom Anwender vergeben, d.h. er bestimmt, welche Daten "wichtige Daten" (z.B. von Regelkreisen) sind und daher immer übertragen werden müssen. Weniger wichtige Steuerungsdaten (z.B. zur Ansteuerung von Signal-Leuchten) können in einzelnen Zyklen ausgelassen werden.

Zur Vereinfachung der Projektierung muss hier eine automatische Ableitung der Priorisierung PR aus dem Anwenderprogramm angestrebt werden. Wie geschildert, können dabei semantische Informationen über die Steuerungsdaten oder Verwendungsinformationen der Steuerungsdaten herangezogen werden.

Alternativ kann die Anpassung der Datentelegramme (PDUs - Payload Data Units) abhängig von Netzwerkzustand NZ oder speziell einer Auslastungsinformation auch im Edge-Port (z.B. Netzwerkinterface) des Switches SW erfolgen. Dieser lernt die IO-Daten-Struktur und deren Priorität PR beim Anlauf und er kann die vom Endgerät gesendeten Daten selektiv "untersetzen". Oft werden schon heute Priorisierungsklassen für die Pakete genutzt; auch damit können die Größen der PDU anhand der Datenprioritäten angepasst werden. Dazu ist eine Bearbeitung der Pakete im Switch SW notwendig. Allerdings wird dadurch nur eine reine Priorisierung der Daten erreicht, aber keine Untersetzung. Heute verwenden Switches ASICs, um schnell große Datenmengen zu verarbeiten. Hier sind zur Realisierung der Erfindung angepasste ASICs notwendig, welche das Kommunikationsprotokoll interpretieren und anpassen können. Daher ist das Anpassen der PDUs im Publisher (sendende Automatisierungskomponente) die bevorzugte Lösung. Die Realisierung in den Switches SW kann jedoch zur Integration von "Bestandsgeräten" genutzt werden.

Weiterhin ist eine Rückmeldung des Zustandes NZ der Kommunikation an eine Anwendung möglich, so dass diese auch auf den Notbetrieb des Netzwerkes N reagieren und z.B. Geschwindigkeiten reduzieren kann.

## Patentansprüche

1. Verfahren zur Übertragung von Steuerungsdaten zwischen industriellen Automatisierungskomponenten (P, S),
wobei zyklisch wiederholt Datentelegramme mit Datensätzen mit jeweils aktualisierten Steuerungsdaten über ein paketvermitteltes Netzwerk (N) übertragen werden,
**dadurch gekennzeichnet,**
**dass** der sendenden Automatisierungskomponente (P) Zustandsinformationen (NZ) oder Auslastungsinformationen über zumindest einen Abschnitt des Netzwerks (N) zur Verfügung gestellt werden oder von dieser Automatisierungskomponente (P) erfasst werden,
wobei zumindest im Fall einer Überlastung des Abschnitts ein Teil der Datensätze mit einer dynamisch an die Auslastung angepassten Untersetzung übertragen wird,
wobei bei einer Übertragung mit der Untersetzung ein betroffener Datensatz nicht mit jedem Zyklus der zyklischen Übertragung übermittelt wird.

2. Verfahren nach Patentanspruch 1,
**dadurch gekennzeichnet,**
**dass** eine Auswahl der im Fall einer Untersetzung seltener zu übertragenden Datensätze anhand einer Prioritätsinformation (PR) zu den in den Datensätzen jeweils enthaltenen Steuerungsdaten vorgenommen wird.

3. Verfahren nach einem der vorhergehenden Patentansprüche,
**dadurch gekennzeichnet**,
die Zuordnung der Prioritätsinformation (PR) zu den jeweiligen Steuerungsdaten zur Laufzeit der Automatisierungskomponenten (P, S) erfolgt.

4. Verfahren nach Patentanspruch 3,
**dadurch gekennzeichnet,**
**dass** die Festlegung der Priorität anhand einer Zustandsinformation (NZ) einer industriellen Automatisierungsanordnung mit den Automatisierungskomponenten (P, S) erfolgt.

5. Verfahren nach Patentanspruch 3 oder 4,
**dadurch gekennzeichnet,**
**dass** die Priorität anhand des Wertes eines Steuerungsdatums festgelegt wird.

6. Verfahren nach Patentanspruch 5,
**dadurch gekennzeichnet,**
**dass** in einem Fall, in dem der Wert eines Steuerungsdatums einem für dieses Steuerungsdatum definierten Grenzwert angenähert ist oder diesen Grenzwert verletzt, diesem Steuerungsdatum eine höhere Priorität zugeordnet wird, und in einem umgekehrten Fall eine niedrigere Priorität zugeordnet wird.

7. Verfahren nach einem der vorhergehenden Patentansprüche,
**dadurch gekennzeichnet,**
**dass** anhand der Zustandsinformation (NZ) oder Auslastungsinformation für einen Teil der Datensätze temporär eine ereignisbasierte Kommunikation anstelle der zyklusbasierten Übermittlung angewendet wird.

8. Verfahren nach einem der vorhergehenden Patentansprüche,
**dadurch gekennzeichnet,**
**dass** zumindest eine Prioritätsklasse definiert wird, wobei für die dieser Prioritätsklasse zugeordneten Steuerungsdaten keine Untersetzung vorgesehen ist.

9. Verfahren nach einem der vorhergehenden Patentansprüche,
**dadurch gekennzeichnet,**
**dass** aus einer Projektierung einer industriellen Automatisierungsanordnung mit den Automatisierungskomponenten (P, S) automatisch den Steuerungsdaten jeweils eine Prioritätsinformation (PR) zugeordnet wird, wobei die jeweilige Verwendung des jeweiligen Steuerungsdatums als Kriterium für eine jeweilige Priorität verwendet wird.

10. Verfahren nach Patentanspruch 9,
**dadurch gekennzeichnet,**
**dass** denjenigen Steuerungsdaten, die für die Generierung von Alarmen berücksichtigt werden, in Abhängigkeit von einer jeweiligen Klasse des Alarms eine Prioritätsinformation (PR) zugeordnet wird.

11. Verfahren nach einem der vorhergehenden Patentansprüche,
**dadurch gekennzeichnet,**
**dass** die Untersetzung der Daten in einem Anwendungsprogramm der sendenden Automatisierungskomponente (P) organisiert wird.

12. Verfahren nach einem der vorhergehenden Patentansprüche,
**dadurch gekennzeichnet,**
**dass** die Untersetzung der Daten in einer Netzwerkkomponente des Netzwerks (N) organisiert wird, insbesondere in einem Switch (SW) oder einem Router.

13. Automatisierungskomponente (P) zur Übertragung von Steuerungsdaten zu zumindest einer weiteren Automatisierungskomponente (S) einer industriellen Automatisierungsanordnung, wobei die Automatisierungskomponente (P) zur zyklisch wiederholten Übertragung von Datentelegrammen mit Datensätzen mit jeweils aktualisierten Steuerungsdaten über ein paketvermitteltes Netzwerk (N) eingerichtet ist,
**dadurch gekennzeichnet, dass**
die Automatisierungskomponente (P) zur Generierung oder zum Empfang von Auslastungsinformationen über zumindest einen Abschnitt des Netzwerks (N) eingerichtet ist,
wobei die Automatisierungskomponente (P) derart eingerichtet ist, dass zumindest im Fall einer Überlastung des Abschnitts ein Teil der Datensätze mit einer dynamisch an die Auslastung angepassten Untersetzung übertragen wird, wobei bei einer Übertragung mit der Untersetzung ein betroffener Datensatz nicht mit jedem Zyklus der zyklischen Übermittlung vorgesehen ist.
